# EUROPÄISCHE PATENTANMELDUNG

(11) **EP 0 786 661 A2**
(43) Veröffentlichungstag der Anmeldung: **30.07.1997**
(21) Anmeldenummer: 97101007.9
(22) Anmeldetag: 23.01.1997
(51) Int. Cl.: G01N 30/48, B01J 20/32, B01D 15/08

(54) **Verfahren zur Modifizierung von silanol- oder silanolgruppenhaltigen stationären Trägerphasen mit Calixaren für die Chromatographie**

(30) Priorität: 24.01.1996 DE 19602393
(71) Anmelder: Menyes, Ulf, Dr., 17489 Greifswald (DE); Roth, Ulrich, Dr., 17498 Levenhagen (DE); Tröltzsch, Christof, Prof. Dr., 17489 Greifswald (DE)
(72) Erfinder: Menyes, Ulf, Dr., 17489 Greifswald (DE); Roth, Ulrich, Dr., 17498 Levenhagen (DE); Tröltzsch, Christof, Prof. Dr., 17489 Greifswald (DE)
(74) Vertreter: Meyerhöfer, Dietmar, Dipl.-Ing.

(57) **Zusammenfassung**

Bei den silanol- oder silanolgruppenhaltigen Trägerphasen, vorzugsweise Kieselgel oder Glas, werden die Silanolgruppen zuerst mit einem Dialkylsilan umgesetzt, so daß eine möglichst große Zahl der Silanolgruppen der stationären Phase modifiziert ist, und danach erfolgt mittels heterogener Hydrosilylierung die Verknüpfung zwischen einer olefinischen Gruppe, die im Calixaren enthalten ist, und der Silanfunktion der vorbereiteten stationären Phase bei Anwesenheit eines oder mehreren Edelmetallkatalysatoren.

Anwendungsgebiet der Erfindung ist die Säulenchromatographie, einschließlich der HPLC, die Dünnschichtchromatographie, einschließlich der HPTLC und der Dickschichtchromatographie und die Gaschromatographie mit gepackten Säulen.

## Beschreibung

Die Erfindung betrifft ein Verfahren zur Modifizierung von silanol- oder silanolgruppenhaltigen stationären Trägerphasen mit Calixarenen für die Chromatographie und ist geeignet sowohl für die Anwendung in der Dünnschichtchromatographie (DC und High Performance Thin Layer Chromatography), in der Flüssigkeitschromatographie (FC, Säulenchromatographie und High Performance Liquid Chromatography) als auch in der Gaschromatographie mit gepackten Säulen.

Allgemein ist bekannt, daß die Chromatographie physikalisch-chemische Verfahren zur Trennung von Stoffgemischen für analytische und präparative Zwecke beinhaltet, bei denen sich das zu trennende Gemisch durch Austauschvorgänge auf zwei Hilfsphasen verteilt und dadurch in einer für seine jeweiligen Komponenten typischen Weise aufgetrennt wird.

Voraussetzung zur Anwendung der Chromatographie ist jedoch, daß die im Gemisch enthaltenen Stoffe sich ohne Veränderung lösen bzw. verdampfen lassen. Bei den meisten Chromatographieverfahren bewegt sich eine das Analysegemisch mitführende flüssige oder gasförmige mobile Phase über eine feste oder flüssige stationäre Phase.

Die Möglichkeit, Calixarene für die Modifizierung der stationären Trägerphase für die Chromatographie zu nutzen, ist erstmalig in den beiden japanischen Offenlegungsschriften Hei-5-264531 und Hei-6-58920 genannt worden, in denen vorgeschlagen ist, die Trägermaterialien aus Glycidylmethacrylat nach spezieller Vorbereitung der Phasen mit p-HexachlorosulfonylcalixI6Iaren bzw. p-HexaaminocalixI6Iaren zu modifizieren. Die Phasen besitzen jedoch den entscheidenden Nachteil, daß sie aus organischem Material bestehen. Diese Trägermaterialien sind kostenintensiv und auch nicht gegen alle gängigen HPLC-Lösungsmittel beständig. Außerdem ist die Vorbereitung der Trägerphase für die Verknüpfung mit dem jeweiligen Calixaren sehr aufwendig.

Durch Jeremy D. Glennon et al. in Analytical Letters, 26, January 1993, S. 153-162, und in Analytical Proceedings Including Analytical Communications, January 1994, Vol.33 (1), S. 33-35 wird diesem Nachteil zum Teil abgeholfen, denn es wird vorgeschlagen, in der stationären Trägerphase Kieselgel mit verschiedenen CalixI4Iarenen und CalixI6Iarenen zu modifizieren.

In Analytica Chimica Acta 291 (1994), S.269-275 beschreiben Jeremy D. Glennon et al., die Verknüpfung des Silans der stationären Trägerphase nicht direkt an die olefinische Einheit des Calixarens, sondern verwendet das Mercaptopropyltriethoxysilan, wodurch eine Thioetherbrücke im Molekül entsteht. Der Nachteil dieser Lösungen liegt darin begründet, daß es zur Verknüpfung der Triethoxysilylgruppen untereinander durch eine teilweisen Hydrolyse und anschließenden Ethanolabspaltung kommen kann. Dieses kann gegebenenfalls eine Überbrückung der gewünschten Poren im Kieselgel zur Folge haben, was zu einer Verminderung der spezifischen Oberfläche der Chromatographiephase führt. Da bekannt ist, daß nur ein Teil der Triethoxysilylgruppen an das Kieselgel anknüpfen, entstehen durch Hydrolyse zu mindest teilweise endständige Trihydroxysilylgruppen. Diese aber sind polar und beeinflussen die Chromatografie nachteilig, welche als Umkehrphasenchromatographie betrieben werden soll. Im Falle der Anknüpfung über die Thioetherbrücke ist zudem mit einer geminderten chemischen Stabilität der Phase zu rechnen.

Eine andere Art der Anknüpfung an das Kieselgel beschreiben S. Friebe et al. in Journal of Chromatographic Science, Vol. 33, June 1995, S. 281-284, denn sie verwenden für das Ankoppeln des p-tert-ButylcalixI4Iaren einen kurzen hydrophilen Spacer, der in seiner Ausführung jedoch nicht näher beschrieben ist.

Die Aufgabe der Erfindung besteht in einem Verfahren, welches gestattet, die Modifizierung von silanol- und silanolgruppenhaltigen stationären Phasen für die Chromatographie durch Anknüpfung von Calixaren ohne Anwesenheit von hydrolyseempfindlichen Ethoxysilylgruppen zu realisieren, wodurch eine monomolekulare Bedeckung der silanol- und silanolgruppenhaltigen Trägeroberfläche erreicht werden soll.

Erfindungsgemäß wird die Aufgabe gelöst durch ein Verfahren zur Modifizierung von silanol- oder silanolgruppenhaltigen, stationären Phasen für die Chromatographie, vorzugsweise aus Kieselgel oder Glas bestehend, in derart, daß im ersten Verfahrensschritt die Silanolgruppe mit einem Dialkysilan der Formel 1 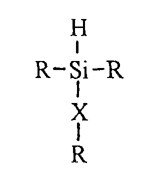 mit
- R =: Alkyl und / oder Aryl und / oder Cycloalkyl, auch mit Heteroatomen, substituiert oder unsubstituiert einzeln oder gemischt,
- X =: N, O, S, Se,
umgesetzt werden und anschließend im zweiten Verfahrensschritt die Verknüpfung einer olefinischen Gruppe, die im Calixaren der Formel 2 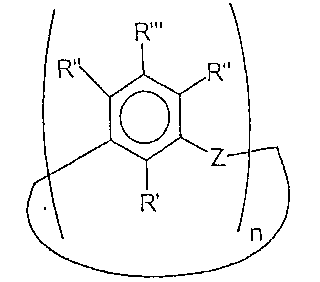 enthalten ist, mit der Silanfunktion der vorbereiteten stationären Phase mittels heterogener Hydrosilylierung erfolgt, wobei in der Formel 2
- n =: 3 bis 12
- R' =: H, OR, SR, NR₂, N⁺R₃
- R'' =: H, R, OR, SR, NR₂, N⁺R₃
- R''' =: H, R, OR, SR, NR₂, N⁺R₃, COR, COOR, CONR₂, N=NR, SO₃R
- Z =: CR₂, ROR; SiR₂, O, S, NR einzeln oder gemischt
mit
- R =: H,
Alkyl und Cycloalkyl, welche gesättigt und ungesättigt sind und / oder Heteroatome enthalten,
Aryl und Heteroaryl, welche auch substituiert und / oder kondensiert sind mit Alkyl- und / oder Arylgruppen, die ihrerseits auch ungesättigt sein und / oder Heteroatome enthalten können,
Halogene
wobei R auch gemischt vorliegen kann und die Voraussetzung erfüllt sein muß, daß R' und / oder R''' mindestens eine ungesättigte Gruppe der Form -CH=CH₂ enthalten.

Verfahrensgemäß ist gesichert, daß eine sehr große Zahl von Silanolgruppen durch das entsprechende Dialkylsilan modifiziert ist.

Das erfindungsgemäße Verfahren ist in recht einfacher Weise durchzuführen, da als Dialkylsilan das käufliche Ethoxydimethylsilan verwendet werden kann. Dieses wird in trockenem Toluol mit dem Kieselgel oder Glas unter Kochen am Rückfluß unter einer Stickstoffatmosphäre umgesetzt. Das für die jeweilige Trennaufgabe vorgesehene Calixaren wird in der Art und Weise modifiziert, daß mindestens eine terminale olefinische Gruppierung im Molekül vorhanden ist. Die Zahl der terminale olefinischen Gruppen und ihre Position im Molekül ist dabei unerheblich. Es reicht schon eine Gruppe aus, um eine Anbindung an die Silanfunktion des modifizierten Kieselgels oder Glas erreichen zu können.

Von der Stereochemie im Calixarenmolekül her muß ein Zugang zur Silangruppe möglich sein. Das so modifizierte Calixaren wird in Toluol in Anwesenheit eines geeigneten Katalysators, wie z.B. Hexachloroplatinsäure, mit dem Silan im Sinne einer Additionsreaktion umgesetzt. Das calixarenmodifizierte Kieselgel oder Glas wird mit einem geeigneten Lösungsmittel gewaschen, um nichtumgesetztes Calixaren und den Katalysator zu entfernen.

Anschließend wird es im Vakuum getrocknet und als stationärer Träger für die jeweilige Trennaufgabe vorbereitet.

Die erfindungsgemäß über den hydrophoben Spacer erfolgte Anknüpfung liefert eine Silizium-Kohlenstoffbindung, welche sich durch eine extreme Stabilität und Hydrolyseunempfindlichkeit auszeichnet.

Der Träger kann direkt zur Säulenchromatographie eingesetzt werden oder nach Versetzung mit einem geeigneten Binder und eventuell einem Fluoreszenzindikator auf die üblichen Platten- und Folienmaterialien für die Dünnschicht-, Dickschichtchromatographie oder HPTLC aufgebracht werden. in der Gaschromatographie kann der Träger in der Form von gepackten Säulen eingesetzt werden.

Bei der Säulenchromatographie, einschließlich HPLC, wird in bekannter Weise das zu trennende organische und / oder anorganische Stoffgemisch auf die Säule, die die erfindungsgemäß modifizierte stationäre Phase enthält, gegeben und durch Durchströmen der Säule mittels geeigneter organischer und / oder anorganischer Lösungsmittel oder Lösungsmittelgemische eluiert. Am Ende der Säule werden nach Durchströmen eines geeigneten Detektorsystems und / oder nach Auffangen die zu trennenden Stoffe detektiert.

Bei der Dünnschichtchromatographie, einschließlich der HPTLC, und der Dickschichtchromatographie mittels der erfindungsgemäß modifizierten stationären Phase, die durch Bindemittel und / oder Fluoreszenzindikatoren auf übliche Platten und Folienmaterialien aufgebracht ist, wird in üblicher Weise das zu trennende Stoffgemisch auf den Startpunkt aufgetragen und mittels Lösungsmittels oder Lösungsmittelgemisches in einer geeigneten Kammer entwickelt. Nach Trocknen werden die Flecken in geeigneter Art und Weise auf der Platte oder Folie detektiert.

Bei der Gaschromatographie mit gepackter Säule wird in bekannter Weise das zu trennende Stoffgemisch in einem Injektorsystem verdampft und anschließend mittels eines geeigneten Trägergases die Trennsäule, die mit der erfindungsgemäß modifizierten Phase gefüllt ist, durchströmt. Am Ende der Säule werden die Stoffe in geeigneter Art und Weise in einem Detektionssystem detektiert.

Die Erfindung soll an Ausfühungsbeispielen näher erläutert werden.

Beispiel 1: 5 g Kieselgel der Sorte Lichrosorb 10 Mikrometer der Firma Merck mit einer Oberfläche von ungefähr 300 mm²/g werden in 50 ml Toluol mit 3,75 ml Ethoxydimethylsilan, dessen Gehalt an SiH dich Titration mit Brom in Eisessig und anschließender Rücktitration mit Kaliumjodid und Thiosulfat bestimmt wird, versetzt und 8 h unter Rückfluß im Stickstoffstrom gekocht. Nachfolgend wird das Kieselgel abgesaugt, mit Toluol / Dioxan / Chloroform / Aceton gewaschen und im Vakuum getrocknet. 4 g des so modifizierten Kieselgels werden in etwa 100 ml trockenem Toluol suspendiert, mit 1,94 g p-tert.-ButylcalixI6Iarenhexaallyether und 35,3 mg RhCl(PPh₃)₃ versetzt und 16 h unter Rückfluß im Stickstoffstrom gekocht. Das erhaltene calixarenmodifizierte Kieselgel wird mit Toluol / Dioxan / Chloroform / Aceton gewaschen und im Vakuum getrocknet.

Beispiel 2: 5 g Kieselgel der Sorte Lichrosorb 100 Mikrometer der Firma Merck werden in 50 ml Toluol mit 3,75 ml Ethoxydimethylsilan versetzt und 8 h unter Rückfluß im Stickstoffstrom gekocht. Anschließend wird das Kieselgel abgesaugt, mit Toluol / Dioxan / Chloroform / Aceton gewaschen und im Vakuum getrocknet. 4 g des so modifizierten Kieselgels werden in trockenem Tuluol suspendiert, mit 1,4 g CalixI6Iarenhexaallylether und 35,3 mg RhCl(PPh₃)₃ versetzt und 16 h unter Rückfluß im Stickstoffstrom gekocht. Das erhaltene calixarenmodifizierte Kieselgel wird anschließend mit Toluol / Dioxan / Chloroform / Aceton gewaschen und im Vakuum getrocknet.

## Patentansprüche

1. Verfahren zur Modifizierung von silanol- oder silanolgruppenhaltigen stationären Trägerphasen mit Calixaren für die Chromatographie, gekennzeichnet dadurch, daß zuerst die Silanolgruppe der Formel 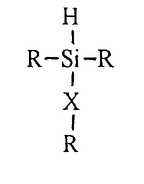 mit
R = Alkyl und / oder Aryl und / oder Cycloalkyl auch mit Heteroatome, substituiert oder unsubstituiert einzeln oder gemischt,
X = N, O, S, Se,
umgesetzt werden und anschließend in Anwesenheit eines oder mehrerer Edelmetallkatalysatoren die Verknüpfung einer olefinischen Gruppe, die im Calixaren der Formel 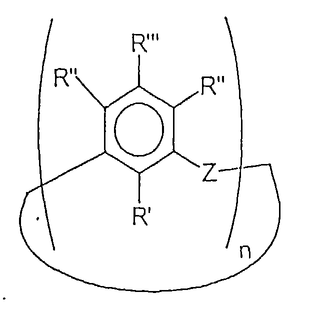 an den modifizierten stationären Träger mittels heterogener Hydrosilierung erfolgt, wobei in der Formel des Calixarens
n = 3 bis 12
R' = H, OR, SR, NR₂, N⁺R₃
R'' = H, R, OR, SR, NR₂, N⁺R₃
R''' = H, R, OR, SR, NR₂, N⁺R₃, COR, COOR, CONR₂, N=NR, SO₃R
Z = CR₂,ROR, SiR₂, O, S, NR einzeln oder gemischt
mit
R = H,
Alkyl und Cycloalkyl, welche gesättigt und / oder ungesättigt sind und / oder Heteroatome enthalten
Aryl und Heteroaryl, welche auch substituiert und / oder kondensiert sind mit Alkyl- und / oder Arylgruppen, die ihrerseits auch ungesättigt sein und / oder Heteroatome enthalten können,
Halogene,
wobei R auch gemischt sein kann und die Voraussetzung erfüllt sein muß, daß R' und / oder R''' mindestens eine ungesättigte Gruppe der Form -CH=CH₂ enthalten.

2. Verfahren zu Modifizierung von silanol- oder silanolgruppenhaltigen stationären Trägerphasen mit Calixarenen nach Anspruch 1, gekennzeichnet dadurch, daß die verfahrensgemässen Träger bei der Säulenchromatographie einschließlich der HPLC, bei der Dünnschichtchromatographie einschließlich HPTLC, bei der Dickschichtchromatographie und bei der Gaschromatographie mit gepackten Säulen Anwendung finden.
